Europäisches Patentamt

European Patent Office

Office européen des brevets

(19)

(11) Veröffentlichungsnummer : **0 473 544 A1**

(12) **EUROPÄISCHE PATENTANMELDUNG**

(21) Anmeldenummer : **91810650.1**

(22) Anmeldetag : **16.08.91**

(51) Int. Cl.⁵ : **B61C 3/02, B60K 1/04**

(30) Priorität : **28.08.90 CH 2800/90**

(43) Veröffentlichungstag der Anmeldung :
**04.03.92 Patentblatt 92/10**

(84) Benannte Vertragsstaaten :
**FR GB IT**

(71) Anmelder : **SIG Schweizerische
Industrie-Gesellschaft
CH-8212 Neuhausen am Rheinfall (CH)**

(72) Erfinder : **Steinbrecher, Luigi
Tannenstrasse 6
CH-8212 Neuhausen am Rheinfall (CH)**

(74) Vertreter : **Peege, Klaus c/o Hiebsch & Peege
AG et al
Vordergasse 56, Postfach 226
CH-8201 Schaffhausen (CH)**

(54) **Vorrichtung zur Kopplung der Steuerung und batterie-elektronischen Versorgung von Antriebsmotoren von Lokomotiven.**

㊼   Die Erfindung betrifft eine Vorrichtung (11) zur Kopplung der Steuerung und batterie-elektrischen Versorgung von Antriebsmotoren von Lokomotiven (10), vorzugsweise Grubenlokomotiven. Die Vorrichtung (11) weist eine verkuerzte Bauform auf, so dass bei gegebener Laenge einer Lokomotive (10) mehr Batterievolumen zugeladen oder zu Verbesserung der Schachtgaengigkeit eine Lokomotive (10) verkuerzt ausgefuehrt werden kann.

EP 0 473 544 A1

Jouve, 18, rue Saint-Denis, 75001 PARIS

Fig.1

Die Erfindung betrifft eine Vorrichtung nach dem Oberbegriff des Anspruches 1.

Von batterie-elektrisch betriebenen Lokomotiven, insbesondere Grubenlokomotiven werden hohe Leistungen gefordert. Diese Forderung ist nur durch entsprechende Kapazitaet der Batterien zu erfuellen.

So sind Grubenlokomotiven bekannt, die beispielsweise mit 110 Einzel-Akkumulatoren zu 2 Volt als Stromquelle ausgeruestet sind. Untergebracht sind die Akkumulatoren in zwei Batteriekaesten mit je 55 Batterie-Zellen, wobei jeder Batteriekasten einen elektrisch positiv und negativ aufgeladenen Ausgang aufweist, die in Serie geschaltet sein koennen, so dass sich die Spannung fuer die geforderte Leistungen verdoppelt.

Obwohl grundsaetzlich weitere Leistungssteigerungen durch Vermehrung der Einzel-Akkumulatoren moeglich waeren, sind diesem Loesungsweg jedoch Grenzen gezogen. Umriss und Laengserstreckung von Batteriekaesten sind nicht beliebig zu vergroessern. So bestimmt sich der Umriss unter Beruecksichtigung der Fahrgestellabmessungen nach dem Stollenprofil, waehrend Schachtbemessungen die groestmoegliche Laengserstreckung einer Untertagelokomotive bestimmt.

Ist von einer Grubenlokomotive eine besondere Schachtgaengigkeit gefordert, haben sich in eine dadurch bestimmte zulaessige Laengserstreckung ein oder zwei Fuehrerstaende, ein oder mehrere Batteriekaesten und alle Einrichtungen zur Antriebssteuerung zu teilen, wobei die Laenge der Fuehrerstaende sich nach ergonomischen Anforderungen bestimmt, so dass fuer Anordnung und Bemessung von Steuereinrichtungen, Batteriekasten oder -Kaesten und sonstiger Einrichtungen nur der Raum zwischen den Fuehrerstaenden oder einem Fuehrerstand und Ende einer Lokomotive verbleibt.

Bekannt sind Grubenlokomotiven mit hintereinander angeordneten Batteriekaesten, bei denen die Leistungsverbindung beider Batterien, der Hauptschalter, der bei Ueberlast oder Kurzschluss die Batterie abschaltet, die elektronische Antriebssteuerung, die DC-DC-Wandler fuer Licht und Funk, die Schnittstelle des Steuerpultes im Fuehrerstand mit der elektrischen Traktionssteuerung die Kabelausgaenge fuer die Motoren, das Steuerpult, die Bremsventile etc. in mindestens einem zwischen Batteriekasten und Fuehrerstand angeordneten separatem Kasten oder Kaesten angeordnet und die Batterien ueber einen zwischen den Batterien angeordneten Kasten und Kabel miteinander verbunden sind.

Die Laenge dieser Kaesten stellen die Schachtgaengigkeit von Untertagelokomotiven beeintraechtigende Verlustlaengen dar.

Ausgehend von diesem Stand der Technik haben sich die Erfinder die Aufgabe gestellt, eine Vorrichtung zur Kopplung der Steuerung und batterie-elektrischen Versorgung von Antriebsmotoren von Lokomotiven, vorzugsweise Grubenlokomotiven zu schaffen, die die aus dem Stand der Technik bekannten Verlustlaengen weitgehend ausschaltet und die Aufgabe wird erfindungsgemaess durch die Merkmale des Anspruches 1 geloest.

Gemaess der Erfindung ist zwischen den Batteriekaesten ein Steuerkasten vorgesehen, der Einrichtungen zur Verbindung der Batteriekaestenanschluesse mit dem Steuerkasten aufweist Damit entfaellt auf einer Grubenlokomotive gemaess dem Stand der Technik mindestens ein Kasten, so dass dessen Raum einerseits bei gegebener Baulaenge einer Grubenlokomotive zur Leistungssteigerung dem Batterievolumen zugeschlagen werden kann, waehrend andererseits bei gleichbleibendem Batterievolumen zur Erhoehung der Schachtgaengigkeit eine Grubenlokomotive um die Verlustlaenge verkuerzt ausfuehrbar wird.

Um die Einsatzbereitschaft, d.h. taegliche Dienstzeit von Grubenlokomotiven hochzuhalten, werden entladene gegen aufgeladene Akkumulatoren zur Energieversorgung der Lokomotiven ausgetauscht, indem die Batteriekaesten gewechselt werden. Zum schnellen Wechseln der Batteriekaesten ist erfindungsgemaess vorgesehen, die Anschluesse der Batteriekaesten mit den Steuerkaesten ueber Steckverbindungen vorzunehmen.

Bevorzugt ist gemaess der Erfindung die Steckverbindungen der Batteriekaesten mit dem Steuerkasten aus jeweils zwei am Steuerkasten angeordneten Huelsen und jeweils zwei an den Batteriekaesten angeordneten Dornen auszubilden, wobei die Dorne mit den Huelsen in Eingriff bringbar sind. Bei dieser Ausfuehrungsform entfaellt vorzugsweise eine gesondert, beispielsweise manuell herzustellende Verbindung, da mit Abheben und Aufsetzen der Batteriekaesten die elektrischen Verbindungen - sofern diese in senkrechter Richtung verlaufend angeordnet sind - selbsttaetig getrennt oder hergestellt werden.

Gemaess einer weiteren vorteilhaften Weiterbildung der Erfindung sind die Dorne paarweise in zu Mittellinien von Stirnseiten der Batteriekaesten in gleichem Abstand versetzt angeordneten und mit den Stirnseiten verbundenen Tragkaesten aufgenommen. Die Kaesten sind erfindungsgemaess aussermittig an einer Haelfte einer Stirnseitenflaeche eines Batteriekastens angeordnet, so dass durch Drehen der Batteriekaesten jeder Batteriekasten zum Steuerkasten die Lage des anderen einnehmen kann. Dadurch wird erreicht, dass nur ein Batteriekastentyp erforderlich wird, was die Lagerhaltung von Batteriekaesten vereinfacht und verbilligt.

Gemaess einer weiteren vorteilhaften Ausgestaltung der Erfindung weisen die Tragkaesten im wesentlichen parallel zwischen den Dornen verlaufende Ausleger auf, die an ihren freien Enden mit Einrichtungen zur induktiven Uebertragung von Batteriedaten, z.B. Ladezustand, versehen sind. Damit wird nach der Erfindung erreicht, dass bei Batteriekasten-Wechsel auch diese Kontrollverbindung zwischen Batteriekasten und Steuerkasten zur Verkuerzung der Umruestzeit selbsttaetig hergestellt wird.

Nach weiteren vorteilhaften Ausgestaltungen der Erfindung, insbesondere zur optimalen Nutzung des freien, inneren Raumes des Steuerkastens, sind darin vorzugsweise alle Schalt- und Steuereinrichtungen, die dem Betrieb einer Lokomotive dienen, ferner Abschalteinrichtungen fuer Batterien, Schnittstellen zur Antriebssteuerung in Verbindung eines im Fuehrerstand vorgesehenen Steuerpultes, DC-DC-Wandler fuer die Stromversorgung der Beleuchtung und des Funks aufgenommen.

Nach der Erfindung sind an der die Huelsen tragenden gegenueberliegenden Seite des Steuerkastens Kabelanschluesse vorgesehen. Durch diese Anordnung koennen Kabel z.B. zwischen Steuerkasten und Antriebsmotor duetlich im Vergleich zu bisher gebrauechlichen Kabellaengen verkuerzt werden.

Nach einer weiteren vorteilhaften Weiterbildung der Erfindung sind die Kabelanschluesse im wesentlichen horizontal verlaufend angeordnet, was die Montage von Kabeln groesseren Querschnittes mit dem Steuerkasten erleichtert und Kabelschlaufen vermeidet, so dass im Lokomotivchassis mehr Raum fuer Gestaenge etc. bleibt.

Entsprechend einer weiteren vorteilhaften Ausgestaltung der Erfindung sind die Anschluesse zwischen 0° und 30°, zur Horizontalen geneigt abwaerts angeordnet, wodurch ein Wassereintritt in den Steuerkasten vermieden wird.

Der Steuerkasten gemaess der Erfindung ist mindestens einmal stirnseitig, d.h. an der Seite, die der Stirnseite eines Batteriekastens gegenueberliegt, mit einer Zugangsoeffnung versehen, die mit einer Verschlussplatte abdeckbar ausgebildet ist. Die Zugangsoeffnung kann sehr gross gestaltet werden und dient so der besseren Zugaenglichkeit bei Montage und Wartung des Steuerkasteninhaltes. Wesentlich ist gemaess der Erfindung, dass der Steuerkasteninhalt zu Wartungszwecken erst zugaenglich wird, wenn eine oder beide Batteriekaesten von der Lokomotive entfernt sind. Mit Entfernung einer Batterie trennt ein Nullspannungsrelais die Stromzufuhr der anderen Batterie zum Steuerkasten, wodurch dieser stromlos wird. Durch diese Eigensicherung wird die Unfallgefahr bei Reparaturarbeiten deutlich gesenkt. Zur Abfuhr von im Steuerkasten durch die Schaltelemente etc. erzeugten Waerme hat es sich als vorteilhaft erwiesen, den Steuerkasten mit Einrichtungen fuer die Waermeabfuhr zu versehen.

Durch die Aufteilung der Kapazitaet des moeglichen Batterievolumens in mehrere, beispielsweise zwei einzelne Batteriekaesten, wird deren Handhabung beim Auswechseln durch niedrigere Gewichte erleichtert, was zur Folge hat, dass kleinere Hebezeuge verwendet werden koennen.

Weitere Vorteile, Merkmale und Einzelheiten der Erfindung ergeben sich folgend aus der Beschreibung eines bevorzugten Ausfuehrungsbeispieles und anhand der Zeichnungen; es zeigen

Fig. 1: Eine Grubenlokomotive in der Seitenansicht; und

Fig. 2: Verbindungsseiten zweier Batteriekaesten mit Steuerkasten in perspektivischer Darstellung.

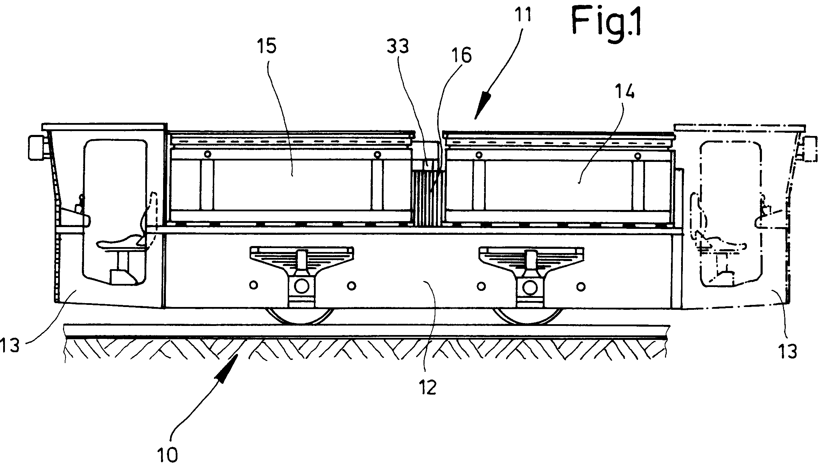

Figur 1 zeigt eine Grubenlokomotive 10 mit der erfindungsgemaess ausgebildeten Vorrichtung zur Kopplung der Steuerung und batterie-elektrischen Versorgung ihres Antriebsmotors. Die Grubenlokomotive besitzt ein Chassis 12, auf dem die Vorrichtung 11 aufgesetzt ist. Beidseits am Ende des Chassis 12 sind Fuehrerstaende 13 vorgesehen, zwischen denen die Vorrichtung 11 und zwar ohne Verlustlaengen zwischen Vorrichtung 11 und Fuehrerstaende 13 aufgenommen ist.

Die Vorrichtung 11 besteht aus zwei Batteriekaesten 14 und 15, die auf dem Chassis 12 hintereinander angeordnet sind und deren Batteriekastenanschluesse 33 ueber einen Steuerkasten 16 miteinander in elektrischer Wirkverbindung stehen. Die Batteriekaesten 14 und 15 nehmen Einzelakkumulatorzellen auf. Batteriekaesten 14, 15 mit entladenen Akkumulatoren koennen gegen Batteriekaesten mit geladenen ausgetauscht werden, wobei der Austausch vermittels Hebezeugen erfolgt, so dass fuer die Lokomotive 10 eine hohe Betriebsbereitschaft sichergestellt ist.

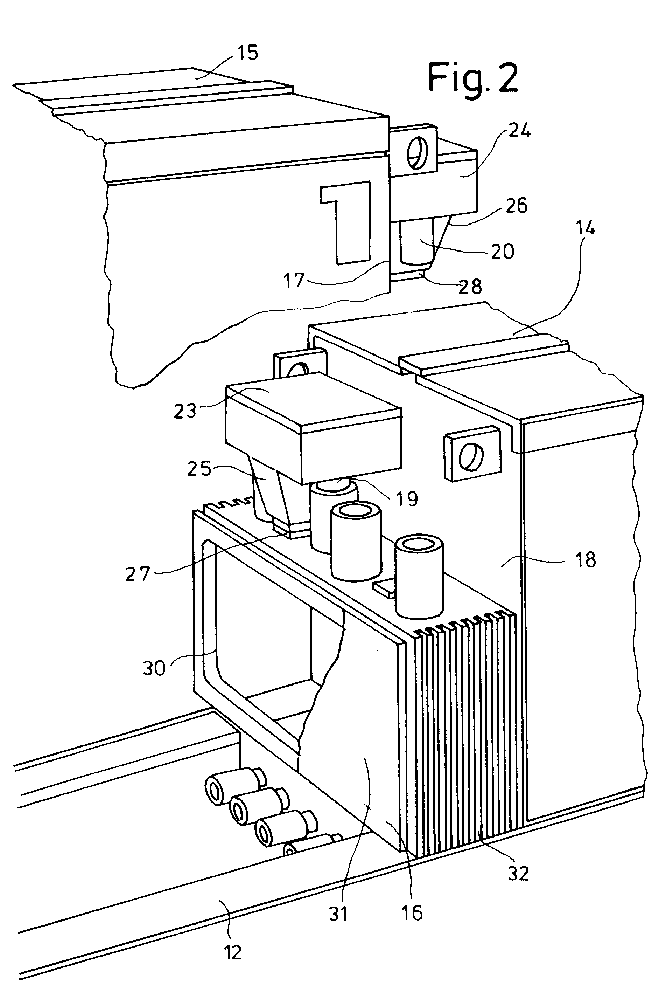

Gemaess Figur 2 ist der Steuerkasten 16 zwischen den Batteriekaesten 14, 15 angeordnet. Der Steuerkasten 16 ist fest mit dem Chassis 12 verbunden. Bei aufgesetzten Batteriekaesten 14, 15 liegen die Stirnseiten 17, 18 der Batteriekaesten 14, 15 nahezu an dem Steuerkasten 16 an. Jeder Batteriekasten 14, 15 weist an seiner Stirnseite 17 oder 18 je einen elektrisch positiv und negativ geladenen Anschluss in Form von Dornen 19, 20 auf, die durch nicht gezeigte Einrichtungen im Steuerkasten 16 die Akkumulatoren in den Batteriekaesten miteinander verbinden. Die Dorne 19, 20 sind Teile einer Steckverbindung, die aus den Dornen 19, 20 und Huelsen 21, 22 gebildet ist. Die Dorne 19, 20 sowie die Bohrungsachse der Huelsen 21, 22 verlaufen senkrecht zum Chassis 12, so dass die Steckverbindung durch Heben oder Senken der Batteriekaesten 14, 15 geloest oder erstellt werden kann. Die Dorne 19, 20 jedes Batteriekastens 14, 15 sind in einem Tragkasten 23, 24 angeordnet, der die Dorne 19, 20 in Abstand und parallel verlaufend zu einer Stirnseite 17, 18 haelt. Wie Figur 2 zeigt, sind die Tragkaesten 17, 18 so angeordnet, dass die Tragkaesten 23, 24 in Eingriffstellung ihrer Dorne 19, 20 mit den Huelsen 21, 22 oberhalb des Steuerkastens 16 nebeneinanderliegen. Die Tragkaesten 23, 24 sind zu diesem Zweck bezueglich der senkrechten Mittellinie der Stirnseiten in eine Haelfte der Stirnseiten 17, 18 nach aussen versetzt. Jeder Tragkasten 23, 24 weist einen Ausleger 25, 26 auf, der sich zwischen den Dornen 19, 20 gleichgerichtet, wie die Dorne 19, 20, erstreckt. Die Ausleger 25, 26 weisen an ihrem unteren freien Ende Einrichtungen 27, 28 zur induktiven Uebertragung von Batteriedaten auf.

In dem Steuerkasten 16 sind alle Elemente zum Verbinden, Trennen, Steuern und Ueberwachen, wie z.B. die Leistungsverbindung beider Batterien (gebildet durch die Akkumulatoren in den Batteriekaesten 14, 15), ein Hauptschalter, der bei Ueberlast oder Kurzschluss die Batterien abschaltet, die elektronische Antriebssteuerung, DC-DC-Wandler für die Lichtstromversorgung der Lokomotive 10 und Stromerzeugung fur Funkanlagen, eine Schnittstelle, beispielsweise eines eigensicheren Steuerpultes mit der elektronischen Traktionssteuerung und die Kabelausgaenge fur die Antriebsmotoren, das Steuerpult, Bremsventile etc. unter- bzw. angebracht, wodurch die fuer diese Unterbringungszwecke bisan notwendigen gesonderten Kaesten entfallen. Gegenueber der die Huelsen 21, 22 tragenden Seite des Steuerkastens 16, bevorzugt zwischen Rahmenteilen des Chassis 12, sind an den Steuerkaesten 16 Anschluesse 29 fuer Kabel vorgesehen. Die Anschluesse 29 sind in ihrem axialen Verlauf im wesentlichen bevorzugt horizontal angeordnet. Vorzugsweise weisen die Anschluesse zur Horizontalen einen Neigungswinkel von 0° bis 30°, in Gleisrichtung gesehen abwaertsgerichtet, auf.

Der Steuerkasten 16 ist stirnseitig mit mindestens einer Zugangsoeffnung 30 zur Wartung und Instandstellung des Steuerkasteninhaltes versehen, die mit einer Verschlussplatte 31 geschlossen werden kann. Fuer eine gute Zugaenglichkeit wird die Zugangsoeffnung 30 so gross wie moeglich dimensioniert und kann die ganze Breite eines Batteriekastens erreichen. Die Zugangsoeffnung 30 wird bei Anordnung des Steuerkastens 16 zwischen zwei Batteriekaesten 14, 15 nur zugaenglich, wenn ein Batteriekasten 14 oder 15 entfernt ist. Mit Entfernung einer Batterie trennt ein Nullspannungsrelais auch die Stromzufuhr der anderen Batterie zum Steuerkasten 16, so dass der Steuerkasten 16 spannungslos wird. Damit weist der Steuerkasten 16 im Zusammenhang mit Reparatur- und Wartungsarbeiten eine hohe Eigensicherung auf.

Zur Ableitung der Waerme, die im Steuerkasten 16 durch die Trenn- und Steuereinrichtungen, sowie in uebrigen Einrichtungen (alle nicht gezeigt) erzeugt wird, ist der Steuerkasten 16 mit Kuehlrippen 32 versehen.

Die erfindungsgemaesse Vorrichtung wurde im Zusammenhang mit einer bevorzugten Ausfuehrungsform beschrieben. Darauf ist die Erfindung jedoch nicht beschraenkt. Sie kann im Zusammenhang mit einem Batteriekasten zwischen Fuehrerstand und Batteriekasten ebenso zur Anwendung gelangen, wie mit zwei oder mehr Batteriekaesten. Ebenso ist sie fuer Lokomotiven mit nur einem Fuehrerstand ebenso anwendbar, wie fuer Lokomotiven mit zwei Fuehrerstaenden.

## Patentansprüche

1. Vorrichtung zur Kopplung der Steuerung und batterie-elektrischen Versorgung mit Antriebsmotoren von Lokomotiven, vorzugsweise Grubenlokomotiven, bestehend aus in Steuerkaesten aufgenommenen Einrichtungen zur Steuerung der Antriebsmotoren in elektrischer Wirkverbindung mit Antriebsmotoren und einer Batterie, die aus mindestens zwei Batteriekaesten zur Aufnahme von Einzelakkumulatoren-Zellen gebildet ist, wobei jeder Batteriekasten einen zweipoligen Batteriekastenanschluss aufweist,
   dadurch gekennzeichnet,
   dass zwischen zwei Batteriekaesten (14, 15) ein Steuerkasten (16) mit Einrichtungen zur Verbindung der Batteriekastenanschluesse (33) mit dem Steuerkasten (16) angeordnet ist.

2. Vorrichtung nach Anspruch 1, dadurch gekennzeichnet, dass die Einrichtungen zur Verbindung der Batteriekastenanschluesse (33) mit dem Steuerkasten (16) als Steckverbindung ausgebildet sind.

3. Vorrichtung nach Anspruch 2, dadurch gekennzeichnet, dass die Steckverbindungen aus jeweils zwei am Steuerkasten (16) angeordneten Huelsen (21, 22) und jeweils zwei an den Batteriekaesten (14, 15) angeordneten mit den Huelsen (21, 22) in Eingriff bringbaren Dornen (19, 20) bestehen.

4. Vorrichtung nach Anspruch 3, dadurch gekennzeichnet, dass die Dorne (19, 20) paarweise in zu Mittellinien von Stirnseiten (17, 18) der Batteriekaesten (14, 15) in gleichem Abstand versetzt angeordneten und mit den Stirnseiten (17, 18) verbundenen Tragkaesten (23, 24) aufgenommen sind.

5. Vorrichtung nach Anspruch 4, dadurch gekennzeichnet, dass die Tragkaesten (23, 24) in Eingriffstellung der Steckverbindung nebeneinander angeordnet sind.

6. Vorrichtung nach Anspruch 5, dadurch gekennzeichnet, dass die Tragkaesten (23, 24) einseits verbundene im wesentlichen parallel zwischen zwei Dornen (19, 20) verlaufende Ausleger (25, 26) aufweisen, die an ihren freien Enden Einrichtungen (27, 28) zur induktiven Uebertragung von Batteriedaten aufweisen.

7.  Vorrichtung nach einem der Ansprüche 1 bis 6, dadurch gekennzeichnet, dass in dem Steuerkasten (16) alle Trenn-, Schalt- und Steuereinrichtungen fuer den Betrieb einer Grubenlokomotive sowie weitere Einrichtungen wie Schnittstellen zur Verbindung und Betaetigung der Antriebssteuerung vermittels eines Steuerpultes, DC-DC-Wandler fuer Lichtstrom und Funk angeordnet sind.

8.  Vorrichtung nach einem der Ansprueche 1 bis 7, dadurch gekennzeichnet, dass der Steuerkasten (16), auf der die Huelsen (21, 22) tragenden Flaeche gegenueberliegenden Flaeche Anschluesse (29) fuer Kabel unter anderem zur Steuerung und Energieversorgung der Antriebsmotoren aufweist.

9.  Vorrichtung nach Anspruch 8, dadurch gekennzeichnet, dass die Anschluesse (2a) fuer die Kabel im wesentlichen horizontal verlaufend angeordnet sind.

10. Vorrichtung nach Anspruch 9, dadurch gekennzeichnet, dass die Anschluesse (29) zwischen 0° bis 30°, zur Horizontalen abwaerts geneigt angeordnet sind.

11. Vorrichtung nach einem der Ansprüche 1 bis 10, dadurch gekennzeichnet, dass der Steuerkasten (16) stirnseitig mindestens eine Zugangsoeffnung (30) aufweist, die mit einer Verschlussplatte (31) abdeckbar ausgebildet ist.

12. Vorrichtung nach Anspruch 11, dadurch gekennzeichnet, dass der Steuerkasten (16) eine Einrichtung zur Waermeabfuhr (32) aufweist.

Fig.1

Fig.2

EP 0 473 544 A1

Europäisches
Patentamt

**EUROPÄISCHER RECHERCHENBERICHT**

Nummer der Anmeldung

EP 91 81 0650

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 816 245 (THOMAS HILL (ROTHERHAM) LTD.) <br> * Seite 8, Zeile 16 - Seite 11, Zeile 1; Abbildungen 1-3 * <br><br> ----- | 1 | B61C3/02 <br> B60K1/04 |
| | | | **RECHERCHIERTE SACHGEBIETE (Int. Cl.5)** <br><br> B61C <br> B60K <br> B60L <br> E21F |

Der vorliegende Recherchenbericht wurde für alle Patentansprüche erstellt

| Recherchenort | Abschlußdatum der Recherche | Prüfer |
|---|---|---|
| DEN HAAG | 07 NOVEMBER 1991 | CHLOSTA P. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
......................................................................................................
& : Mitglied der gleichen Patentfamilie, übereinstimmendes
    Dokument

EPO FORM 1503 03.82 (P0403)

9